# DEMANDE DE BREVET EUROPEEN

(11) **EP 1 557 665 A1**
(43) Date de publication de la demande: **27.07.2005**
(21) Numéro de dépôt: 04405039.1
(22) Date de dépôt: 21.01.2004
(51) Int. Cl.: G01N 27/403, C25B 11/02

(54) **Système d'electrodes pour capteur electrochimique**

(71) Demandeur: CSEM Centre Suisse d'Electronique et de Microtechnique SA, 2007 Neuchâtel (CH)
(72) Inventeur: Gobet, Jean, 2035 Corcelles (CH); Niedermann, Philippe, 2034 Peseux (CH); Rychen, Philippe, 68640 Muespach-le-Haut (CH)
(74) Mandataire: Gresset, Jean

(57) **Abrégé**

L'invention concerne un système d'électrodes destiné à une cellule électrochimique, comportant un substrat (20) et, liées à lui, une électrode de mesure formée d'une pluralité de micro-disques électriquement conducteurs (23, 24) connectés entre eux, et une électrode génératrice formée d'une plaque électriquement conductrice (30) percée d'ouvertures circulaires (31) de diamètre supérieur à celui des micro-disques et disposée de manière à ce que chaque ouverture soit concentrique à un micro-disque. Le substrat (20) est en un matériau électriquement conducteur et est percé, sur sa face supérieure, d'un réseau régulier de cavités cylindriques (22). Les micro-disques (23, 24) formant l'électrode de mesure sont contenus dans ces cavités.

## Description

La présente invention se rapporte aux capteurs électrochimiques destinés à mesurer la concentration d'une substance chimique dans un liquide. De tels dispositifs trouvent une application particulièrement intéressante, mais non exclusive, à la détection des niveaux de chlore dans l'eau potable ou l'eau des piscines.

L'invention concerne, plus particulièrement, un système d'électrodes pour cellule électrochimique, ainsi que son procédé de fabrication.

Les capteurs électrochimiques du type ci-dessus comportent nécessairement une électrode de mesure, une électrode de référence et une contre-électrode. On connaît également un autre type de tels capteurs qui comportent, en outre, une électrode, dite génératrice, et sa contre-électrode. L'ajout de ces deux dernières électrodes, dont l'effet est de créer des modifications de concentration d'espèces présentes en solution, permet de contrôler localement l'environnement de l'électrode de mesure.

Par exemple, le pH de la solution peut être modifié localement par l'application d'un courant à l'électrode génératrice. Un courant cathodique entraînera la production de ions OH- (le pH devenant alors plus basique) et, inversement, un courant anodique entraînera la production de ions H+ (le pH devenant alors plus acide). Une contre-électrode associée à l'électrode génératrice, une contre-électrode associée à l'électrode de mesure (ou de travail) et une électrode de référence sont nécessaires à la réalisation d'un capteur complet.

Ces dernières électrodes, dont les dimensions n'ont pas besoin d'être microscopiques, sont bien connues dans le domaine considéré et peuvent être montées séparément. Le document US 5 597 463 décrit, par exemple, un capteur de ce second type, destiné à effectuer un titrage et avec lequel la mesure effectuée est de type potentiostatique.

On comprendra aisément qu'il est particulièrement avantageux d'utiliser, comme électrode de mesure, des électrodes de très petites dimensions, non seulement parce que cela permet de réduire l'espace entre l'électrode de mesure et l'électrode génératrice, mais aussi parce que les effets de la turbulence du liquide dans la cellule s'en trouvent minimisés. De telles électrodes de petites dimensions sont appelées indiféremment, dans la suite de la description, "micro-électrodes" ou "micro-disques", cette dernière appellation étant due au fait que les micro-électrodes sont le plus souvent de forme circulaire.

Le document WO 02/095387 décrit une structure, représentée à la figure 1, utilisant un substrat électriquement conducteur 10, avantageusement réalisé en silicium dopé et dont la face inférieure est recouverte d'une couche de métallisation 11. Sa face supérieure est recouverte d'une couche de passivation 12 formée d'un empilement de deux sous-couches de SiO₂ et Si₃N₄, connu pour présenter une excellente stabilité en milieu aqueux.

La couche de passivation 12 est percée d'un réseau régulier d'ouvertures traversantes circulaires recevant un micro-disque conducteur 13 sensiblement plus épais que la couche et débordant légèrement sur elle afin d'éviter tout contact de la solution à mesurer avec le substrat.

Les micro-disques sont formés du ou des matériaux d'électrode souhaités, par exemple, d'un empilement de couches de titane, de platine et d'or. Ces couches constituent, ensemble, l'électrode de mesure du système.

La présente invention a pour but de fournir une structure d'électrodes de mesure améliorée, non seulement du point de vue de sa durabilité et de son efficacité, mais aussi de celui de son coût de production.

De façon plus précise, l'invention concerne un système d'électrodes destiné à une cellule électrochimique, ladite cellule étant du type qui comporte un substrat et, liées à lui et proches l'une de l'autre, d'une part, une électrode de mesure formée d'une pluralité de micro-disques électriquement conducteurs connectés entre eux, et, d'autre part, une électrode génératrice formée d'une plaque électriquement conductrice percée d'ouvertures circulaires de diamètre supérieur à celui des micro-disques et disposée de manière à ce que chaque ouverture soit concentrique à un micro-disque. Ce système est principalement caractérisé en ce que :
- le substrat est en un matériau électriquement conducteur et est percé, sur sa face supérieure, d'un réseau régulier de cavités de forme sensiblement cylindrique, et
- les micro-disques, formant l'électrode de mesure, sont contenus dans ces cavités.

Le système d'électrodes selon l'invention présente encore les caractéristiques suivantes.
- Il comporte une couche électriquement isolante déposée sur le substrat et percée d'une pluralité d'ouvertures circulaires centrées sur les cavités et ayant un diamètre inférieur à celui des cavités.
- Les micro-disques comportent une métallisation mince, déposée au fond de chaque cavité et de diamètre sensiblement égal à celui des ouvertures de la couche isolante, et, éventuellement, une métallisation épaisse remplissant, au moins partiellement, le reste de la cavité.
- La métallisation mince comporte un empilement formé d'une couche d'adhérence et d'une couche barrière de diffusion, qui peuvent être respectivement en titane et en platine.
- La métallisation épaisse est formée du matériau d'électrode souhaité, qui peut être de l'or.
- La métallisation épaisse peut soit affleurer la face supérieure du substrat, soit être recouverte d'une couche active qui affleure la face supérieure du substrat.
- L'électrode génératrice peut être soit une mince couche de diamant conducteur, soit une couche conductrice épaisse qui forme, autour des micro-électrodes, une paroi arrondie en forme d'entonnoir définissant un volume de confinement les protégeant du flux hydrodynamique de la solution à traiter.
- Le substrat est en silicium rendu conducteur par dopage.

La présente invention concerne encore un procédé de réalisation de l'électrode de mesure d'un système d'électrodes tel que défini ci-dessus. Il . comporte la succession des opérations suivantes :
- se munir d'un substrat conducteur ;
- déposer la couche isolante sur sa face supérieure ;
- former sur ladite couche isolante un masque doté d'un réseau d'ouvertures circulaires dont la disposition et le diamètre correspondent au réseau des micro-disques à réaliser ;
- graver la couche isolante au travers du masque de manière à obtenir lesdites ouvertures circulaires ;
- graver profondément le substrat au travers de ces ouvertures de manière à obtenir lesdites cavités ;
- déposer lesdites métallisations minces au fond de chaque cavité ; et
- déposer lesdites métallisations épaisses sur les métallisations minces.

Le procédé selon l'invention présente encore les caractéristiques suivantes :
- Le gravage de la couche isolante et le gravage du substrat sont réalisés par plasma ou par voie chimique humide.
- Le dépôt des métallisations minces est réalisé par évaporation sous vide.
- Le dépôt des métallisations épaisses est réalisé par croissance galvanique ou par précipitation catalytique.

D'autres caractéristiques de l'invention ressortiront de la description qui va suivre, faite en regard du dessin annexé, dans lequel:
- la figure 2 est une vue en plan du système proposé, sans son électrode génératrice ;
- la figure 3 est une vue partielle en coupe à grande échelle selon AA de ce système;
- la figure 4 illustre la suite des opérations permettant la réalisation d'une telle structure ; et
- les figures 5 et 6 illustrent deux manières originales de réaliser l'électrode génératrice.

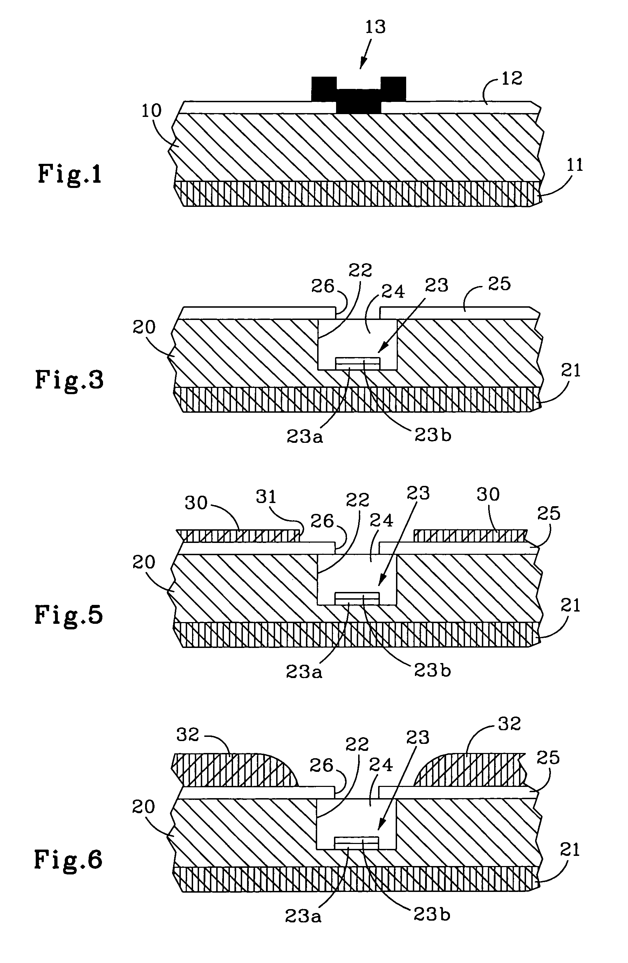

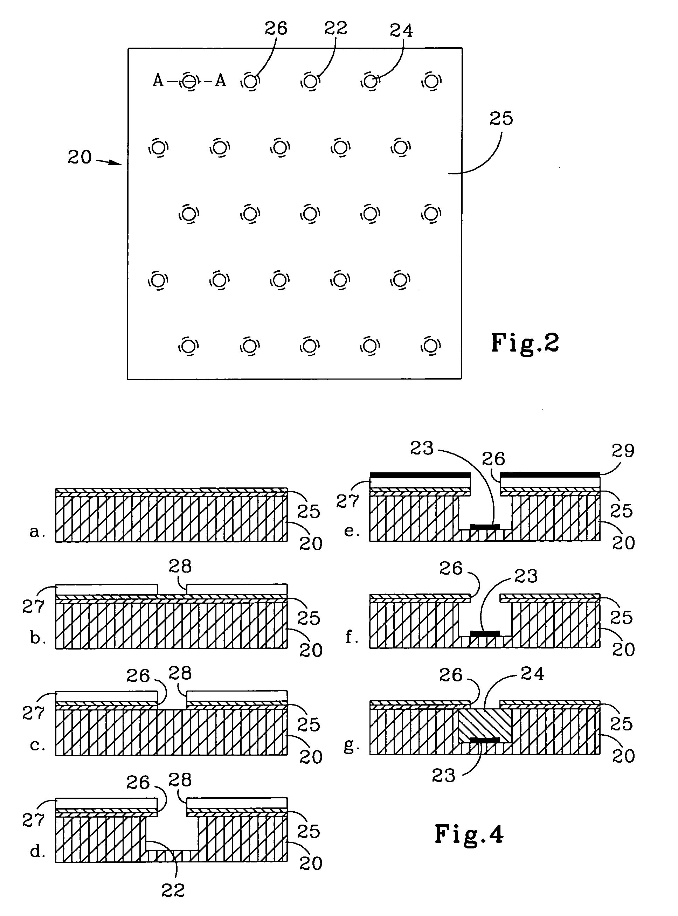

La structure représentée aux figures 2 et 3 possède un substrat électriquement conducteur 20 qui se présente sous la forme d'une plaque carrée de, typiquement, 2 à 10 mm de côté et 0.5 mm d'épaisseur. Cette plaque est, avantageusement, réalisée en silicium rendu conducteur par dopage selon des techniques bien connues de l'homme de métier.

La face inférieure du substrat 20 est recouverte d'une couche conductrice 21 réalisée, par exemple, en titane ou en aluminium ou formée d'un empilement de trois sous-couches de titane, platine et or. L'épaisseur de cette couche 21 est d'environ 0.2 à 0.3 µm.

Le substrat 20 est percé, sur sa face supérieure, d'un réseau régulier de cavités sensiblement cylindriques 22, d'axe perpendiculaire au plan du substrat. Typiquement, ces cavités ont un diamètre de 2 à 20 µm, une profondeur de 2 à 20 µm et sont espacées les unes des autres d'environ 40 à 400 µm.

Le fond de chaque cavité 22 est partiellement recouvert d'une métallisation mince 23 formée d'une couche d'adhérence 23a et d'une couche conductrice 23b reposant sur la couche d'adhérence. Cet empilement, par exemple, de titane et de platine, a une épaisseur d'environ 0.2 à 0.3 µm. Dans certaines applications, la couche 23b sert également de barrière de diffusion. On remarquera, par ailleurs, que la métallisation 23 a un diamètre inférieur de 0.5 à 5 µm à celui de la cavité.

En variante, le reste de la cavité 22 est rempli par une métallisation épaisse 24 formée du matériau d'électrode souhaité, avantageusement de l'or ou tout autre métal susceptible d'être déposé par croissance galvanique, tel que platine, cuivre, etc.

Selon une variante non représentée, le dépôt d'or 24 ne remplit que partiellement la cavité 22 dont la partie supérieure reçoit alors une couche active, par exemple en Nafion ou en un polymère conducteur électropolymérisé, tel le Polypyrrole, constituant une membrane sélective, catalytique ou protectrice.

La face supérieure du substrat 20 est recouverte d'une couche isolante 25, dite de passivation, qui est formée, par exemple, d'un empilement de deux sous-couches de Si0₂ et Si₃N₄ et a une épaisseur d'environ 0.1 à 0.3 µm. Cette couche est percée d'un réseau régulier d'ouvertures traversantes circulaires 26 centrées sur les cavités 22 et de même diamètre que les métallisations minces 23, donc de diamètre inférieur à celui des cavités.

On se référera maintenant à la figure 4 qui illustre, à titre d'exemple non limitatif, les principales étapes du procédé de fabrication de la structure représentée aux figures 2 et 3.
- **Etape 1. Figure 4a**
   Le substrat conducteur en silicium 20 est recouvert de la couche de passivation 25 par une opération d'oydation thermique suivie d'un dépôt chimique en phase vapeur, connue de l'homme de métier sous la dénomination LPCVD.
- **Etape 2. Figure 4b**
   Un masque en " photorésist " 27 est formé sur la couche de passivation 25. Il est doté d'un réseau d'ouvertures circulaires 28 dont la disposition et le diamètre correspondent au réseau des métallisations minces 23 à réaliser.
- **Etape 3. Figure 4c**
   La couche de passivation 25 est attaquée par gravage dans un plasma fluoré de manière à obtenir les ouvertures circulaires 26.
- **Etape 4. Figure 4d**
   Un gravage profond au plasma creuse les cavités 22. Les conditions dans lesquelles ce gravage est réalisé sont telles que le diamètre des cavités 22 est sensiblement supérieur à celui des ouvertures 26 de la couche de passivation 25.
- **Etape 5. Figure 4e**
   Les métallisations minces 23 sont déposées par évaporation sous vide. Grâce au pont que forme la couche de " photorésist " 27, les parois des cavités 22 ne sont pas atteintes et les métallisations 23 ont le même diamètre que les ouvertures 26 de la couche de passivation 25. Bien entendu, cette opération métallise également la couche 27 par une couche 29
- **Etape 6. Figure 4f**
   La métallisation 29 et la couche de " photorésist " 27 sont éliminées par un solvant.
- **Etape 7. Figure 4g**
   Le dépôt d'or 24 est finalement formé dans les cavités 22 par croissance galvanique.

Ainsi est réalisé un système de micro-électrodes qui, par rapport à la structure du document WO 02/095387, présente les principaux avantages suivants :
- Le diamètre des électrodes peut être fortement réduit, ce qui diminue d'autant la dépendance hydrodynamique de la réponse du capteur.
- La cavité ménagée dans le substrat permet de réaliser des disques épais, sans pour autant augmenter leur diamètre, ce qui prolonge fortement leur durée de vie.
- La cavité permet, éventuellement, de définir et ancrer une couche active sur la micro-électrode.
- Seule est exposée la face supérieure des électrodes, ce qui réduit leur érosion.
- Des opérations simples permettent le gravage de la couche de passivation pour former les ouvertures 26, le gravage du substrat pour former les cavités 22 et l'élimination de la métallisation 29 et du " photorésist " 27. On remarquera, notamment, qu'un seul masque est nécessaire (le masque en " photorésist " 27) pour réaliser les cavités 22 et dimensionner exactement les micro-disques 23.

En bref, l'invention permet, par un procédé simple et donc peu coûteux, d'obtenir des électrodes épaisses et de très petit diamètre défini avec grande précision.

La structure qui vient d'être décrite peut être complétée par une électrode génératrice métallique disposée autour des électrodes de mesure, selon l'enseignement du document WO 02/095387.

On a observé, cependant, qu'avec une telle structure, la formation d'un bio-film sur les micro-électrodes - et autour d'elles - a pour conséquence une perte progressive de la sensibilité du capteur.

La présente invention a donc aussi pour but d'éliminer cette contamination en remplaçant l'électrode génératrice métallique par une électrode génératrice en diamant 30 déposée, comme le montre la figure 5, sur la couche de passivation 25.

L'électrode 30 est formée d'une mince couche de diamant conducteur, qui est percée d'ouvertures circulaires 31 de diamètre supérieur à celui des micro-électrodes 23 et disposée de manière à ce que chaque ouverture 31 soit concentrique à une micro-électrode. Typiquement, l'électrode 30 a une épaisseur de 0.5 à 5 µm, alors que les ouvertures circulaires 31 ont un diamètre de 5 à 50 µm.

Les tests effectués ont confirmé que le diamant a la plus grande fenêtre de potentiel dans l'eau et permet de générer sur lui des espèces fortement oxydantes, telles que des radicaux OH, capables de brûler efficacement des matières organiques.

Ainsi est proposée une structure qui prévient la formation d'un bio-film de contamination affectant la sensibilité du capteur. L'effet est particulièrement appréciable lorsqu'il s'agit de traiter les eaux usées d'une ville, très riches en matières organiques.

On se référera encore, pour terminer, à la figure 6 montrant une structure dotée d'une électrode génératrice épaisse 32 qui forme, autour des micro-électrodes, une paroi arrondie en forme d'entonnoir définissant un volume de confinement les protégeant du flux hydrodynamique de la solution à traiter.

Cette électrode 32 est avantageusement réalisée en or et déposée par croissance galvanique. Typiquement, son épaisseur est de 10 à 100 µm et l'entonnoir qu'elle forme a, à la base, un diamètre de 10 à 50 µm.

Une telle structure augmente très fortement l'efficacité du système, surtout lorsqu'il doit traiter des liquides agités ou à fort débit, car l'espace créé autour des micro-électrodes permet, non seulement, une concentration des espèces générées, mais aussi, offre une plus grande surface d'électrode génératrice.

On notera, enfin, que le dépôt galvanique de l'électrode épaisse 32 est une opération simple et peu coûteuse.

## Revendications

1. Système d'électrodes destiné à une cellule électrochimique, comportant un substrat (20) et, liées à lui et proches l'une de l'autre, d'une part, une électrode de mesure formée d'une pluralité de micro-disques électriquement conducteurs (23, 24) connectés entre eux, et, d'autre part, une électrode génératrice formée d'une plaque électriquement conductrice (30, 32) percée d'ouvertures circulaires (31) de diamètre supérieur à celui des micro-disques et disposée de manière à ce que chaque ouverture soit concentrique à un micro-disque, **caractérisé en ce que** :
- le substrat (20) est en un matériau électriquement conducteur et est percé, sur sa face supérieure, d'un réseau régulier de cavités (22), et
- les micro-disques (23, 24) formant l'électrode de mesure sont contenus dans lesdites cavités.

2. Système d'électrodes selon la revendication 1, **caractérisé en ce qu'**il comporte une couche électriquement isolante (25) déposée sur le substrat (20) et percée d'une pluralité d'ouvertures circulaires (26) centrées sur les cavités (22) et ayant un diamètre inférieur à celui desdites cavités.

3. Système d'électrodes selon la revendication 2, **caractérisé en ce que** les micro-disques comportent une métallisation mince (23) déposée au fond de chaque cavité (22) et de diamètre sensiblement égal à celui des ouvertures (26) de la couche isolante (25), et, éventuellement, une métallisation épaisse (24) remplissant, au moins partiellement, le reste de la cavité.

4. Système d'électrodes selon la revendication 3, **caractérisé en ce que** la métallisation mince (23) comporte un empilement formé d'une couche d'adhérence (23a) et d'une couche conductrice (23b).

5. Système d'électrodes selon la revendication 4, **caractérisé en ce que** la couche d'adhérence (23a) est en titane et la couche conductrice (23b) en platine.

6. Système d'électrodes selon l'une des revendications 3 à 5, **caractérisé en ce que** la métallisation épaisse (24) est formée du matériau d'électrode souhaité.

7. Système d'électrodes selon la revendication 6, **caractérisé en ce que** la métallisation épaisse (24) est en un matériau électrodéposable, tel que or, platine, cuivre, etc.

8. Système d'électrodes selon l'une des revendications 3 à 7, **caractérisé en ce que** la métallisation épaisse (24) affleure la face supérieure du substrat (20).

9. Système d'électrodes selon l'une des revendications 3 à 7, **caractérisé en ce que** la métallisation épaisse (24) est recouverte d'une couche active affleurant la face supérieure du substrat (20).

10. Système d'électrodes selon l'une des revendications 1 à 9, **caractérisé en ce que** l'électrode génératrice (30) est en diamant conducteur.

11. Système d'électrodes selon l'une des revendications 1 à 9, **caractérisé en ce que** l'électrode génératrice (32) a une épaisseur lui permettant de constituer, autour et au-dessus des micro-électrodes (23, 24), un volume de confinement protégé du flux hydrodynamique de la solution à traiter.

12. Système d'électrodes selon l'une des revendications 1 à 11, **caractérisé en ce que** le substrat (20) est en silicium rendu conducteur par dopage.

13. Procédé de réalisation de l'électrode de mesure d'un système d'électrodes selon l'une des revendications 3 à 12, **caractérisé en ce qu'**il comporte la succession des opérations suivantes :
- se munir d'un substrat conducteur (20) ;
- déposer la couche isolante (25) sur sa face supérieure ;
- former sur ladite couche isolante (25) un masque (27) doté d'un réseau d'ouvertures circulaires (28) dont la disposition et le diamètre correspondent au réseau des micro-disques (23, 24) à réaliser ;
- graver la couche isolante (25) au travers du masque (27) de manière à obtenir lesdites ouvertures circulaires (26) ;
- graver profondément le substrat (20) au travers de ces ouvertures (26) de manière à obtenir lesdites cavités (22) ;
- déposer lesdites métallisations minces (23) au fond de chaque cavité (22) ; et
- déposer lesdites métallisations épaisses (24) sur les métallisations minces (23).

14. Procédé selon la revendication 13, **caractérisé en ce que** le gravage de la couche isolante (25) et le gravage du substrat (20) sont réalisés par plasma.

15. Procédé selon l'une des revendications 13 et 14, **caractérisé en ce que** le dépôt des métallisations minces (23) est réalisé par évaporation sous vide.

16. Procédé selon l'une des revendications 13 à 15, **caractérisé en ce que** le dépôt des métallisations épaisses (24) est réalisé par croissance galvanique.
